# EUROPEAN PATENT APPLICATION

(11) **EP 3 480 502 A1**
(43) Date of publication of application: **08.05.2019**
(21) Application number: 17199501.2
(22) Date of filing: 01.11.2017
(51) Int. Cl.: F16K 37/00, F16K 31/04, F16K 5/06, G01D 5/241

(54) **STAND-ALONE BALL VALVE ACTUATOR**

(71) Applicant: Kamstrup A/S, 8660 Skanderborg (DK)
(72) Inventor: Rømer, Daniel Beck, 8600 Silkeborg (DK); Laursen, Peter Schmidt, 8660 Skanderborg (DK)
(74) Representative: Plougmann Vingtoft a/s

(57) **Abstract**

A stand-alone ball valve actuator (2) comprising an actuator housing (20) including an valve interface (24) configured for releasably coupling the stand-alone ball valve actuator to a ball valve; an electric motor (21) arranged in the actuator housing, configured to selectively rotate a ball element of the ball valve via a gearing (211) and coupling member (23), an encoder assembly (4) for producing a position signal representative of the rotational position of the coupling member; a transceiver system (5) arranged in the actuator housing, for wirelessly receiving configuration information regarding a desired rotational position of the coupling member; a processor (6) arranged in the actuator housing, configured to process said position signal and said configuration information, and control the electric motor to rotate the ball element, accordingly, and a self-contained power source arranged in the actuator housing, for driving the processor, the transceiver system and the electric motor.

## Description

### FIELD OF THE INVENTION

The present invention relates to a stand-alone ball valve actuator for being releasably mounted on a ball valve, wherein the ball valve actuator comprises an electrical motor and a self-contained power sourced for rotating the ball valve between an open and a closed position.

### BACKGROUND OF THE INVENTION

Utility companies supply utilities, such as water and gas, to consumers via a pipe network. Usually, meters are installed in such networks to monitor use and bill user according to their usage of the supplied utility. Controlling the supply of the utility to specific consumers may become relevant if usage is not accounted for or if the utility becomes scares, such as in periods of draught or if other supply problems arise.

Traditionally, manually operated valves located at the consumer premises would have to be operated by the utility to control supply. Closing and reopening the water supply in connection with unpaid bills would thus require substantial manual labor by the utility, which is ineffective, costly and potentially also dangerous.

Remote controllable electrically actuated valves, such as ball valves, are known and may be installed to control the supply of a utility. However, these suffer from various drawbacks such as the need for an external power supply, short product life or lack of waterproof character. Further, it may be advantageously to be able to change or retrofit an electric actuator on a vale after the valve has been installed. For example, simple valves may already exist or be installed at a large number of consumption sites. On the other hand, electric actuators may only be installed at a limited number of prioritized consumption sites, to reduce costs.

Further, in many jurisdictions it is a requirement that consumers always have access to a limited amount of the supplied utility, such as a daily limited amount of water. To be able to reduce the supply to a certain minimum requires that the flow through a valve can be controlled. This may be achieved by reducing the time the valve is open or by reducing the flow rate through the valve.

A need thus exists for an improved motorized ball valve and a stand-alone ball valve actuator, in particular a valve actuator that can be mounted or retrofitted on various ball valve constructions.

### OBJECT OF THE INVENTION

An object of the present invention is to provide a stand-alone ball valve actuator adapted for being mounted or retrofitted on various ball valve constructions, thereby enabling ball valves to be remote controlled.

### SUMMARY OF THE INVENTION

Thus, the above described object and several other objects are intended to be obtained in a first aspect of the invention by providing a stand-alone ball valve actuator comprising a hermetically sealable actuator housing including an valve interface configured for releasably coupling the stand-alone ball valve actuator to a ball valve; an electric motor arranged in the actuator housing, configured to selectively rotate a ball element of the ball valve via a gearing and coupling member; an encoder assembly for producing a position signal representative of the rotational position of the coupling member; a transceiver system arranged in the actuator housing, for wirelessly receiving configuration information regarding a desired rotational position of the coupling member; a processor arranged in the actuator housing, configured to process said position signal and said configuration information, and control the electric motor to rotate the ball element, accordingly, and a self-contained power source arranged in the actuator housing, for driving the processor, the transceiver system and the electric motor.

By providing the actuator components including a self-contained power source, such as a battery, in an actuator housing and providing the actuator with a valve interface, a stand-alone ball valve actuator adapted for being mounted or retrofitted on various ball valve constructions is achieved.

Furthermore, the encoder assembly may include a rotation element at least partly of a conductive material, a sensing disc comprising a plurality of conductive regions covered by a dielectric material and an electronic circuit for measuring a capacitance created between the rotation element and each of the conductive regions. Herein the conductive regions may be provided as copper traces on a printed circuit board (PCB) and the dielectric material may be a solder mask provided on top of the copper traces. Also, the PCB may be a multi-layer PCB and a layer of the PCB next to the layer comprising the conductive regions may be cleared from conductive material. Additionally, a further layer of the multi-layered PCB may be provided with a conductive material in the area above the conductive regions to provide a shield for the capacitance created between the sensing disc and the rotation element.

Moreover, the rotation element may comprise a conductive sensor plate extending perpendicularly from a central shaft, and the sensor plate may be arranged opposite and in parallel with conductive regions provided on the PCB. Herein, the central shaft may be rotationally fixed to the coupling member and extends through an aperture provided in the PCB. More specifically, the central shaft may be arranged in a bore of the coupling member and a spring element may be provided to force the sensor plate against the PCB. Furthermore, the sensor plate may be comprised by two oppositely arranged, electrically connected circle wedges. Also, the rotation element may be a monolithic structure made from an electrical conductive material or an injection moldable electrical conductive polymer composition.

In one embodiment of the above described stand-alone ball valve actuator, the valve interface may include a releasable stem connection for connecting the coupling member to a stem of the ball valve assembly. Moreover, the stem connection may include an indentation provided in the coupling member and the indentation may be adapted for receiving a mating part of the stem of the ball valve assembly. Also, the stem connection may be arranged inside the actuator housing in a position retracted from a bottom face of the actuator housing constituting part of the valve interface. Furthermore, the valve interface may include a locking mechanism for releasably coupling the actuator housing to the ball valve.

Additionally, the stand-alone ball valve actuator may include a display arranged in or below a transparent lid covering an open end of the actuator housing. Also, the stand-alone ball valve actuator may comprise an input device, such as a push button, adapted to provide an input to the processor to control the electric motor to temporarily rotate the ball element to an open or partly open position. Additionally or alternatively, the input device may be configured to control opening of the ball valve based on received configuration information allowing a user to confirm that opening of the ball valve is desired.

Furthermore, the gearing of the stand-alone ball valve actuator may be configured to provide a gear ratio gear ration between 1:8000 and 1:12000.

Moreover, the transceiver system of the stand-alone ball valve actuator may be configured for transmitting status information regarding the rotational position of the coupling member indicative of the state of the associated ball valve.

The invention further relates to a motorized ball valve comprising a ball valve assembly including a valve housing having an inlet for receiving fluid, an outlet for discharging fluid, a flow channel connecting the inlet and outlet, and a controllable ball element moveable to selectively vary the cross-sectional area of flow of at least a portion of the flow channel; and a stand-alone ball valve actuator as described above, mounted on the ball valve assembly.

### BRIEF DESCRIPTION OF THE FIGURES

The stand-alone ball valve actuator and motorized ball valve according to the invention will now be described in more detail with regard to the accompanying figures. The figures show one way of implementing the present invention and is not to be construed as being limiting to other possible embodiments falling within the scope of the attached claim set.
Figure 1 shows a motorized ball valve including a ball valve assembly and a stand-alone ball valve actuator,
Figure 2 shows a cross section of the motorized ball valve in a longitudinal direction,
Figure 3 shows a cross section of the motorized ball valve in a transversal direction,
Figures 4a-4c shows printed circuit boards and internal electronics for the stand-alone ball valve actuator,
Figure 5 shows an equivalence diagram for the capacitor construction of the encoder assembly.
Figure 6 shows a stand-alone ball valve actuator,
Figure 7 shows a mounting interface of the ball valve actuator, and
Figure 8 shows a ball valve assembly.

### DETAILED DESCRIPTION OF AN EMBODIMENT

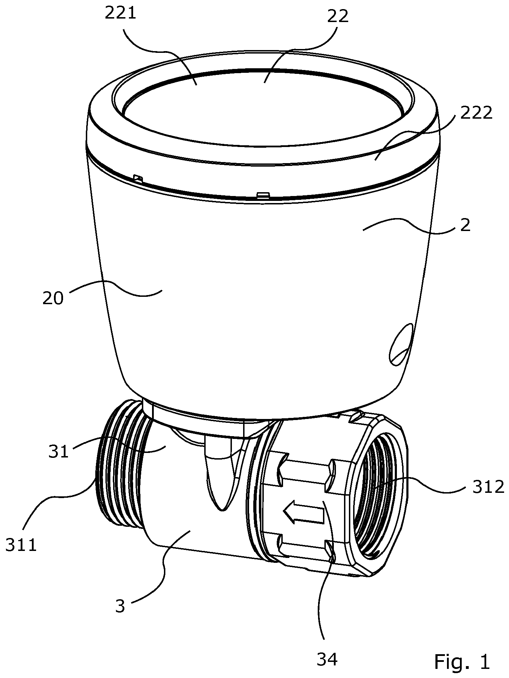

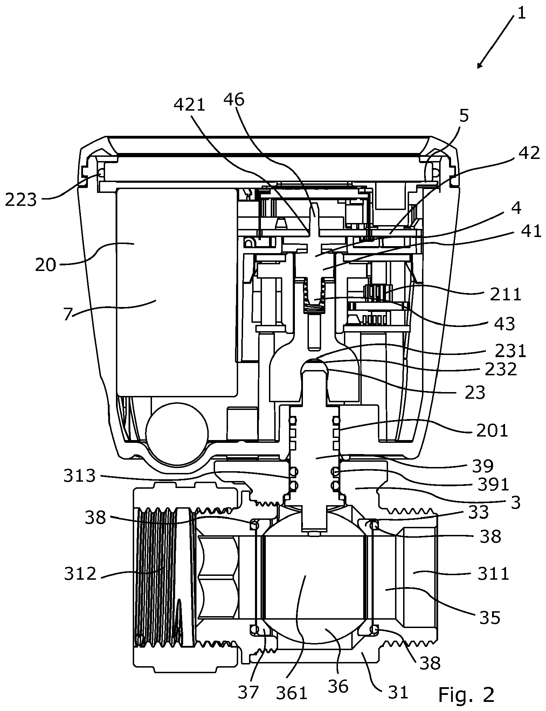

Referring to Fig. 1, the motorized ball valve 1 includes a ball valve assembly 3 and a stand-alone ball valve actuator 2. The ball valve assembly comprises a valve housing 31 having an inlet 312 for receiving fluid and an outlet 311 for discharging fluid. The in- and outlet of the valve housing are provided with threaded connections for connecting the motorized ball valve to connecting pipes. In the shown embodiment, the valve housing is further provided with a connecting nut 34 mounted on one of the threaded connections. The connecting nut is provided with an inner right-handed thread in one end and an inner left-handed thread in as opposite end. During installation of the motorized ball valve, the connecting thread may be rotated and simultaneously screwed onto the thread of the valve housing and a thread provided on a connecting pipe (not shown). As better seen from Fig. 2, the valve housing further comprises a flow channel 35 connecting the inlet and outlet. A controllable ball element 36 is arranged in the flow channel for controlling a flow through the valve. The valve ball is provided with a main aperture 361 and may be rotated inside the valve housing to vary a cross-sectional area of the flow channel. In an alternative embodiment, the valve ball may be provided with a second auxiliary aperture (not shown), smaller than the main aperture. The auxiliary aperture may be used to limit the cross-sectional area of the flow channel in a controlled manner, without having to precisely control the position of the valve ball. Inside the valve housing, the ball valve is supported by ball seats 37 and an O-ring or other packing elements 38 on opposite sides. The O-ring is provided to control the compression force between the ball seat and the valve ball. By including an 0-ring, tolerance requirements on valve housing parts may be reduced, while achieving the required compression force. Including O-rings also provides resilience into the construction, which may prevent or reduce problems related to stuck valve balls caused by wear, corrosion and/or sedimentation. A stem 39 extends from the valve ball through a bore 313 provided in the valve housing. Around the valve stem a number of gaskets 391 are arranged providing a sealing between the stem and the bore.

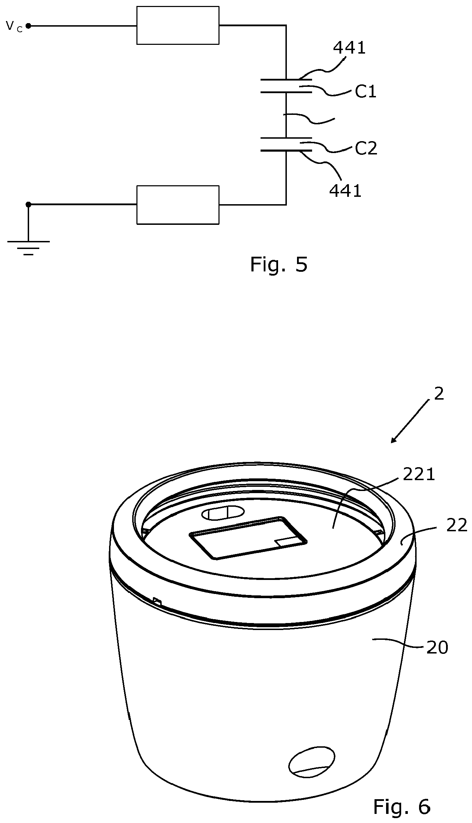

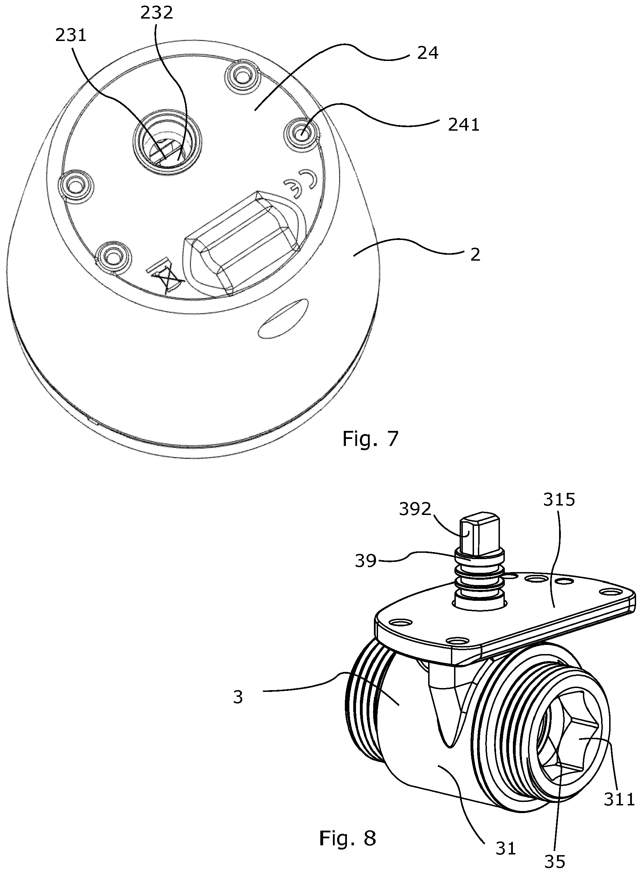

Referring again to Fig. 6, the stand-alone ball valve actuator (2) comprises a housing 20 in the form of a polymer cup provided with a lid 22 including a transparent window element 221 fixated by a locking ring 222. A sealing element 223 is arranged between the housing and the lit, creating a hermetically sealed compartment for internal valve actuator component as seen from Fig. 2. A bottom face of the housing 20 shown in Fig. 7, provides a valve interface 24 for releasably mounting the stand-alone ball valve actuator on an interface of the ball valve assembly. In the shown embodiment, the valve interface includes four threaded holds 241 for receiving a corresponding number of screws extending through holes provided in a connecting flange 315 of the ball valve housing. In other embodiments, the valve interface may include other locking or fixations means, such as a locking mechanism, for releasably connecting the valve interface to the connecting flange. The valve interface may also be designed to engage with a variety of different valve interfaces. Hereby the stand-alone ball valve actuator may be used as a standard actuator for different types and brands of ball valves.

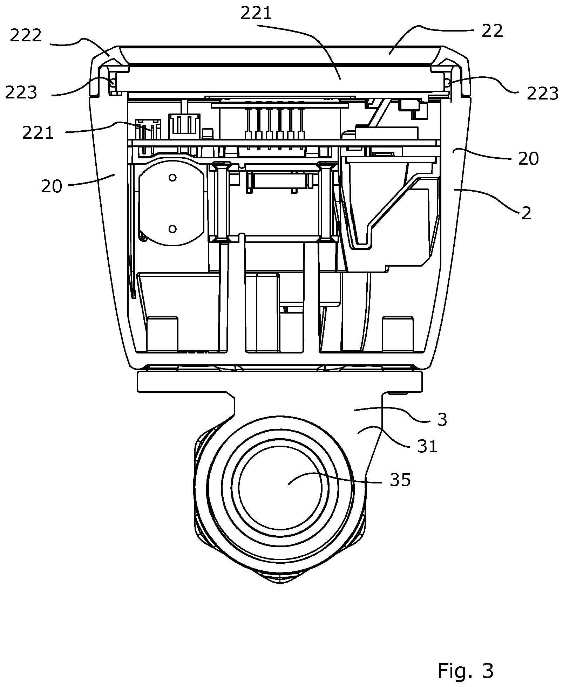

Referring to Fig. 2 and 3, internal valve actuator components include an electric motor 21 for rotating the ball element 36 via a gearing 211 and coupling member 23, an encoder assembly 4 for producing a position signal representative of the rotational position of the coupling member, a transceiver 5 system, a processor 6, and a battery 7 or other self-contained power source.

The coupling member 23 connects to the valve stem 39 and translates rotation of the electric motor via the gearing to the ball member 36. The connecting member includes a stem connection 231 provided with a recess 232 for receiving a mating part 392 of the stem 39 and various geometries may be used for the recess and the mating stem part. In other embodiments, the stem and coupling member may be connected using other mechanical principles such as a connecting sleeve of a thread connection. In the shown embodiment, the stem extends into the housing 20 through a bottom housing bore 201. To ensure a hermetically sealed enclosure inside the housing, sealing members, such as O-ring are provided around the stem along the section arranged in the bottom housing bore. As seen from Fig. 2, the housing of the valve actuator is separated from the ball valve assembly by a gap and the enclosure of the housing is thereby not in fluid communication with the flow channel or other potentially fluid bearing parts of the valve assembly. An upper end of the coupling member, opposite the recess adapted for receiving the stem, is provided with a bore 233 for receiving a rotation member 41 of the encoder assembly.

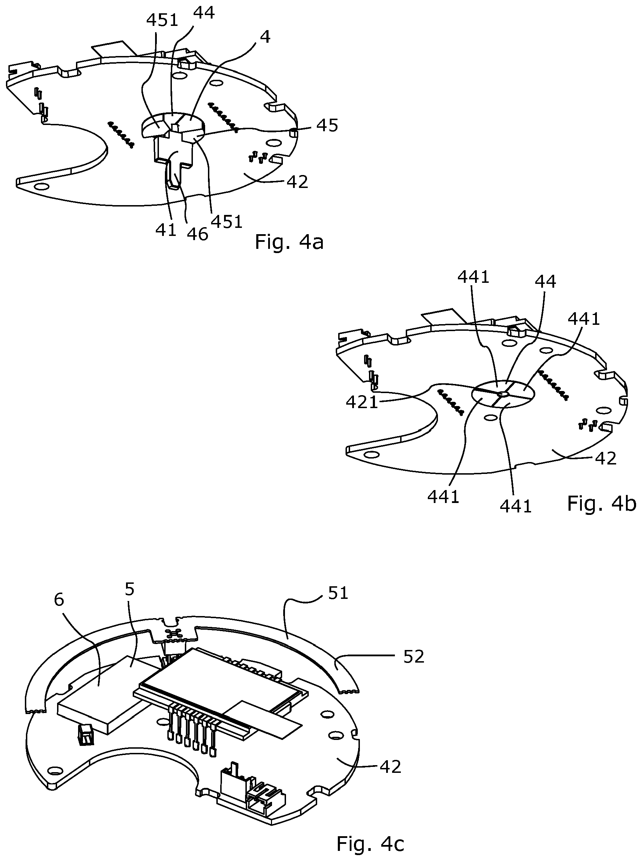

Referring to Fig. 1 and 4, the encoder assembly includes the rotation member 41 and a sensing disc 44 comprised by a number of separate conductive regions 441 provided on a downwards facing side of a printed circuit board 42 (PCB), arranged inside the housing 20. The PCB is covered by an isolating/dielectric coating and together with the rotation member made at least partly from conductive material, a capacitor construction is realized, as will be further described below. In the shown embodiment, the sensing disc is comprised by four regions each constituting a 90 degree circle wedge. However, in other embodiments fewer or more regions could be applied to reduce or increase resolution of the encoder.

The PCB includes four (4) layers (not shown) and the conductive regions consists of copper regions or copper traces 441 provided on a bottom layer the PCB (layer 4) in the above described geometry. The layer of the PCB containing the copper regions 441 is made from FR4 having a thickness from 0,20-0,25 mm. The copper traces have a thickness of 30-40 µm and are covered with a solder mask providing the dielectric isolation layer. Layer 3 of the PCB (the layer next to the bottom layer) have been cleared from conductive material in the area of the conductive regions to avoid negatively influencing the capacitance measurements by the integrated circuit. The capacitance created between the conductive regions and the rotating member is thus isolated on the PCB by providing a distance of 1,0-1,5 mm to the nearest conductive material. Additionally, the second intermediate layer of the PCB (Layer 2) is provided with a conductor, i.e. a layer of copper, in the area of the conductive regions to provide a shield from components provided on the top layer of the PCB (Layer 1).

In other embodiments, the copper traces could be applied to another exterior layer of a PCB, such as the top layer. In a multi-layered PCB, the conductive regions could also be implemented on one of the intermediate layers and the PCB substrate (FR4) could be used as the dielectric material of the capacitor.

The rotation member comprises a sensor plate 45 adapted for being arranged opposite and in parallel with the PCB and the conductive regions. In the embodiment shown in Fig. 4a, the sensor plate is comprised by two oppositely arranged 90 degree circle wedges. I other embodiments the sensor plate may be constituted by a single 90 degree circle wedge, by wider or narrower wedges or a sensor plate shape as a half-circle. The two circle wedges extend from a central shaft 46 coaxial with an axis of rotation of the rotation member. The central shaft 46 extend above the sensor plate through an aperture 421 in the PCB and below the sensor plate into the bore 233 of the coupling member. Additionally, a spring element 43 is provided in the bore to force the sensor plate towards the bottom face of the PCB. Hereby the rotation member is kept in place and good mechanical contact between the sensor plate and the dielectric material of the PCB is achieved.

The rotational member is made of an electrical conductive material, such as an injection molded polymer composition, and the two oppositely arranged circle wedges are electrically connected through the central shaft. In the shown embodiment, the rotation member is a monolithic element, such as an injection molded element. In other embodiments, the sensor plate may include a plate element shaped as a full circle or other geometry covered by a layer of conductive material constituting the circle wedges of half-circle.

By arranging the sensor plate of the rotation member opposite the conductive regions, separated by the dielectric PCB coating, a capacitor construction is realized, as stated above. Each of the conductive regions are connected to an integrated circuit of the processor 6 and by applying a potential to one copper region and grounding the other three an electrical circuit may be created. An equivalence diagram of such circuit is shown in Fig. 5, illustrating a first capacitor C1 constituted by one of the circle wedge 451 of the sensor plate 45 and one of the conductive regions 441 of the sensing disc and a second capacitor C2 constituted by another circle wedge 451 and another conductive region 441. As the rotation member rotates above the conductive regions, variable capacitance are created between the separate circle wedges of the sensor plate and the separate conductive regions. As the capacitance of a capacitor depends on the areas of the overlapping sensor plates, the capacitance of each of the variable capacitors reaches a maximum when a circle wedge is positioned directly above a copper region. As the rotating disc always overlaps at least two conductive regions a circuit including two serial coupled capacitors is created. A first capacitor is created between the first copper region coupled to a potential and the sensor plate and a second capacitor is created between the sensor plate and one or more of the other conductive regions.

The integrated circuit connected to the conductive regions is capable of giving a measure of the capacitance of each copper region in a given instance of time. By tracking and processing this measure of capacitance for each copper region, it is possible to determine the equivalent absolute position of the rotation member, as the capacitance of the regions changes in a well-defined manner Integrated circuits configured for measuring capacitance is well known to the skilled person, and may for example be found in processors from Silicon Labs™ sold under the trademark EFM®32 Gecko.

As the rotation member is rotationally fixed to the coupling member, which again is coupled to the valve ball, it is possible to determine the rotational position of the valve ball from the position of the rotation member. Based on the rotational position of the valve ball, the state of the valve can be determined.

The Electric motor 21 and a gearing 211 are configured for enabling valve operation based on a battery based power supply. The use of a battery power supply poses certain restriction on available voltage and current and power consumption should in general be reduced to extend the operation life of the product. In particular, peak currents may reduce the battery lifetime and should therefore be reduced or avoided. One way of protecting batteries against high peak currents is by including a hybrid layer capacitor (HLC) in the battery pack. HLCs are manufactured and sold byTadiran Batteries™.

In one embodiment the electrical motor is a standard DC motor having an output of 0.3-0.4 W and delivering an output torque 0,5 (mN · m) to 1,0 (mN · m), more specifically 0,6 (mN · m) to 0,8 (mN m). The motor is configured to be driven by a 3.6 voltage supplied by the battery and consumes 50-100 mA during normal operation. Converting this low an output from the electric motor to sufficient driving torque at the valve stem requires a substantial gearing. In the present embodiment, the gearing provides gear ratio of 1:10000, in other embodiments, the gear ratio may be lower or higher, such as between 1:8000 and 1:12000. Providing a sufficient gear ratio is crucial in achieving the torque required to drive a ball valve using a battery supplied electric motor. Without sufficient gearing the electric motor would have to be able to deliver a much higher output torque and a smaller size battery, such as a D-cell, C-cell or one or two A-cell(s) would not be able to deliver the voltage required by such electric motor, during normal operation.

The processor 6 and transceiver system 5 are configured to enable remote control of the ball valve actuator. The transceiver system is configured to wirelessly receive configuration information over a radio frequency communication link from a remotely located transmitter. The transceiver system includes a transmitter, receiver and an antenna device 51 connected to a connector mounted on the PCB. The antenna device includes a rigid antenna substrate 52, such as FR4, provided with a conductive antenna element. The antenna substrate is self-supporting and shaped to extend along an inner face of the housing in parallel with the PCB. The antenna device constitutes a dipolar antenna, and the antenna substrate and conductive element has an angular extension of up to 180 degrees.

Configuration information received by the transceiver system 5 is transferred to the processer 6 that interprets the information and controls the electric motor accordingly. The processor is also configured to compute the position of the ball valve based on input from the encoder assembly, as described above. Based on the configuration information and the present state of the ball valve, the processor is adapted to control the electric motor to rotate the ball valve. If the ball valve is in an open position wherein the aperture in the valve ball is fully aligned with the flow passage, and configuration information instructing closure of the ball valve is received, the electric motor is activated to rotate the valve ball to a closed position. Rotation between the open position and the closed position can be realized by rotating the valve ball 90 degrees in a first direction. Subsequent opening of the ball valve can be achieved by rotating the valve ball 90 degrees in a second direction opposite the first direction. An obvious alternative to would be to rotate the valve ball in the same direction going from the open position to the closed position and from closed position to open position. However, rotating the valve ball back and forth between the open position and the closed position is advantageous in terms of determining the exact position of the valve ball. If the valve ball is continuously rotated tolerances in the encoder assembly and signal processing may result in an offset developing over time between the actual and the estimated position of the valve ball.

Furthermore, the ball valve actuator may be provided with an input device (not shown), such as a push button arranged below the transparent window element. Such a push button may for example be based on capacitive sensing to detect input from a human finger. Such input device being configured to provide an input to the processor to control the electric motor. In one scenario the input device may be configured control the electrical motor to temporarily rotate the ball element to an open or partly open position. By allowing, a user to temporarily open the ball valve a limited amount of water may be supplied to the user as required in some jurisdictions. Certain restriction may apply to the possibility of temporarily opening of the valve. Opening may for example only be possible once a day, one a week or for the specified time period. In another scenario the input device is configured to control opening of the ball valve based on received configuration information. If configuration information is transmitted to the valve actuator instructing opening off the ball valve, the user can use the input device to confirm that opening of the ball valve is desired. If for example the piping network downstream of the closed ball valve is unfit for receiving flowing water, e.g. due to a leak or ongoing repair, the input device may be used to prevent such opening of the ball valve. The input device thereby provides a precautionary measure preventing undesired operation of the valve actuator and opening of the ball valve.

The processor 6, transceiver 5 and electric motor 21 are powered by a battery 7 arranged inside the hermetically sealed compartment of the housing. By including an integrated power source, the ball valve actuator does not require any external wiring and the availability of a mains electricity of other electricity infrastructure. The ball valve actuator is thus completely self-contained and can be mounted on and operated in connection with ball valves installed in remote locations.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A stand-alone ball valve actuator (2) comprising:
a hermetically sealable actuator housing (20) including an valve interface (24) configured for releasably coupling the stand-alone ball valve actuator to a ball valve;
an electric motor (21) arranged in the actuator housing, configured to selectively rotate a ball element of the ball valve via a gearing (211) and coupling member (23);
an encoder assembly (4) for producing a position signal representative of the rotational position of the coupling member;
a transceiver system (5) arranged in the actuator housing, for wirelessly receiving configuration information regarding a desired rotational position of the coupling member;
a processor (6) arranged in the actuator housing, configured to process said position signal and said configuration information, and control the electric motor to rotate the ball element, accordingly, and
a self-contained power source arranged in the actuator housing (7), for driving the processor, the transceiver system and the electric motor.

2. A stand-alone ball valve actuator (2) according to claim 1, wherein the encoder assembly includes a rotation element 41 at least partly of a conductive material, a sensing disc 44 comprising a plurality of conductive regions 441 covered by a dielectric material and an electronic circuit for measuring a capacitance created between the rotation element and each of the conductive regions 441.

3. A stand-alone ball valve actuator (2) according to claim 2, wherein the conductive regions are provided as copper traces 441 on a printed circuit board (PCB) (42) and the dielectric material is a solder mask provided on top of the copper traces.

4. A stand-alone ball valve actuator (2) according to claims 2 or 3, wherein the rotation element comprises a conductive sensor plate (45) extending perpendicularly from a central shaft (46), the sensor plate being arranged opposite and in parallel with conductive regions provided on the PCB.

5. A stand-alone ball valve actuator (2) according to claim 4, wherein the central shaft is rotationally fixed to the coupling member and extends through an aperture (421) provided in the PCB.

6. A stand-alone ball valve actuator (2) according to claim 5, wherein the central shaft is arranged in a bore 233 of the coupling member and a spring element 43 is provided to force the sensor plate against PCB.

7. A stand-alone ball valve actuator (2) according to any of the claims 4-6, wherein the sensor plate is comprised by two oppositely arranged, electrically connected circle wedges (451).

8. A stand-alone ball valve actuator (2) according to any of the claims 2-6, wherein the rotation element is a monolithic structure made from an electrical conductive material or an injection moldable electrical conductive polymer composition.

9. A stand-alone ball valve actuator (2) according to any of the preceding claims, wherein the valve interface includes a releasable stem connection (231) for connecting the coupling member to a stem (39) of the ball valve assembly.

10. A stand-alone ball valve actuator (2) according to claim 9, wherein the stem connection includes an indentation 231 provided in the coupling member, the indentation being adapted for receiving a mating part of the stem of the ball valve assembly.

11. A stand-alone ball valve actuator (2) according to claims 9 or 10, wherein the stem connection is arranged inside the actuator housing in a position retracted from a bottom face (25) of the actuator housing constituting part of the valve interface.

12. A stand-alone ball valve actuator (2) according to any of the preceding claims, wherein the valve interface includes a locking mechanism for releasably coupling the actuator housing to the ball valve.

13. A stand-alone ball valve actuator (2) to any of the preceding claims, wherein the gearing is configured for providing a gear ratio gear ration between 1:8000 and 1:12000.

14. A stand-alone ball valve actuator (2) according to any of the preceding claims, wherein the transceiver system is further configured for transmitting status information regarding the rotational position of the coupling member indicative of the state of the associated ball va Ive.

15. A motorized ball valve (1) comprising:
a ball valve assembly (3) including a valve housing (31) having an inlet (311) for receiving fluid, an outlet (312) for discharging fluid, a flow channel (35) connecting the inlet and outlet, and a controllable ball element (36) moveable to selectively vary the cross-sectional area of flow of at least a portion of the flow channel; and
a stand-alone ball valve actuator (2) according to any of the preceding claims, mounted on the ball valve assembly.
